# FASCICULE DE BREVET EUROPEEN

(11) **EP 2 119 135 B1**
(45) Date de publication et mention de la délivrance du brevet: **28.11.2012**
(21) Numéro de dépôt: 08761979.7
(22) Date de dépôt: 24.01.2008
(51) Int. Cl.: H04L 12/56

(54) **PROCEDE DE TRANSFERT DE PAQUETS DE DONNEES A UNE RESSOURCE PARTAGEE, DISPOSITIF ET PROGRAMME D'ORDINATEUR ASSOCIES**
VERFAHREN ZUR ÜBERTRAGUNG VON DATENPAKETEN AN EINE GEMEINSAME RESSOURCE UND ZUGEHÖRIGE VORRICHTUNG UND COMPUTERSOFTWARE
METHOD FOR TRANSFERRING DATA PACKETS TO A SHARED RESOURCE, AND RELATED DEVICE AND COMPUTER SOFTWARE

(30) Priorité: 30.01.2007 FR 0700602
(43) Date de publication de la demande: 18.11.2009
(73) Titulaire: France Télécom, 75015 Paris (FR)
(72) Inventeur: BROWN, Patrick, F-06800 Cagnes Sur Mer (FR)
(74) Mandataire: Cabinet Plasseraud
(86) Numéro de dépôt international: PCT/FR2008/050114
(87) Numéro de publication internationale: WO 2008/104650

(56) Documents cités:
- US-A1- 2003 214 952
- US-A1- 2006 206 579

## Description

La présente invention se situe dans le domaine des réseaux de télécommunications et concerne l'attribution de ressources du réseau.

L'invention trouve tout particulièrement une application dans le réseau Internet.

Dans le cadre d'une communication entre un terminal d'origine et un terminal destinataire, des paquets sont successivement fournis par le terminal d'origine au réseau de télécommunications, par exemple le réseau Internet. Chacun de ces paquets est ensuite transmis par l'intermédiaire de ressources du réseau Internet jusqu'au terminal destinataire.

Les ressources du réseau Internet comprennent l'ensemble des moyens adaptés pour permettre la transmission des paquets. Ces moyens reçoivent en entrée des paquets et en sortie délivrent des paquets. Les ressources comprennent par exemple les connexions physiques, par câble, fibre optique ou radio entre des équipements du réseau. Elles comprennent encore des équipements, tels que, par exemple, des routeurs etc.

L'utilisation des ressources est partagée entre les paquets. Lorsque le nombre de paquets devant utiliser une même ressource est trop important, cela donne lieu à des phénomènes d'encombrement, encore appelés congestions réseau, localisés notamment au niveau de la ressource pendant une période de durée variable. Un paquet devant être traité par une ressource subissant un phénomène d'encombrement pourra alors subir un temps d'attente particulièrement long avant d'être effectivement traité par la ressource.

La technique généralement mise en oeuvre par défaut dans l'équipement du réseau Internet pour décider de l'attribution des ressources aux paquets est dite « Service au mieux » ou en anglais « Best Effort ». Les paquets sont envoyés par un équipement vers une ressource dans l'ordre dans lequel ils sont reçus par l'équipement. Ce « Service au mieux » produit en général des performances acceptables. Lorsque des congestions occasionnelles ou prolongées apparaissent, ces performances peuvent toutefois se dégrader. Lorsque des ressources offertes sont faibles en capacité, telles que par exemple des accès radio, ces périodes de congestion peuvent se révéler pénalisantes pour les utilisateurs. Et même en présence de capacités plus importantes, des périodes de congestion peuvent néanmoins avoir lieu, du fait notamment des volumes de données croissants exploités par les utilisateurs du réseau Internet.

Des solutions ont été proposées pour diminuer l'occurrence et la durée des phénomènes d'encombrement.

Un premier type de solutions consiste à classer les communications en fonction de critères prédéterminés, tels que l'origine ou la destination de la communication (et donc l'origine ou la destination des paquets transmis dans le cadre de la communication), ou encore en fonction de l'application à l'origine de la communication. Les paquets ont alors accès à la ressource partagée, par exemple un lien de transmission ou un organe de routage, en fonction du classement de la communication à laquelle ils appartiennent. Ce premier type de solutions est donc basé sur le principe que certaines classes de communications sont à sacrifier pour le bon fonctionnement d'autres classes. Ce premier type de solutions suppose en outre que l'utilisateur puisse définir des priorités parmi les applications qu'il utilise et que ces priorités soient fixes ou du moins prévisibles. Cela suppose aussi que les applications à l'origine des communications soient identifiables, et que, lorsque de nouvelles applications sont utilisées, elles soient classées.

Ce premier type de solutions a ainsi l'inconvénient de nécessiter la connaissance des applications à favoriser ou au contraire à défavoriser. Or les applications présentes sur un réseau changent avec le temps. La solution demande donc une mise à jour constante. En outre, il n'est pas toujours aisé pour un utilisateur d'avoir connaissance des applications qu'il utilise parfois sans le savoir à travers des applications tierces. Par ailleurs, souvent, les utilisateurs ne souhaitent pas être obligés de prioriser certaines applications par rapport à d'autres, parce que leur préférence peut dépendre de leur activité ou de la période dans la journée, ou parce qu'ils estiment ne pas pouvoir en mesurer les conséquences sur les performances. La mise en oeuvre de ce type de solutions pénalise certaines applications.

Un deuxième type de solutions a pour objectif d'assurer un partage équitable entre les communications présentes. Ceci peut être réalisé par exemple avec les mécanismes dits "Fair queueing".

Ce deuxième type de solutions ne nécessite pas l'établissement par les utilisateurs d'une liste d'applications à favoriser. Le débit est partagé entre les communications présentes. Différentes pondérations peuvent être associées à des communications d'applications différentes. Toutefois, avec ou sans pondération, lorsqu'une congestion se prolonge, le nombre de communications en cours augmente, et les performances de toutes les communications baissent sans limite inférieure. Les communications ne sont donc pas protégées du comportement des communications voisines. Ainsi certaines applications multiplient le nombre de communications simultanées qu'elles établissent, afin d'occuper une part plus importante des ressources réseau.

Enfin un troisième type de solutions consiste à classer les communications dynamiquement en fonction des paquets qu'elles ont émis, en particulier en attribuant une priorité décroissante en fonction du volume de paquets déjà émis. Ces solutions dites « Aged-Based »sont efficaces lorsque les communications correspondent à des volumes totaux de données transmis très différents ou encore lorsque la distribution de ces volumes a une variance très importante.

Dans la suite de ce document, on appellera « communication longue » une communication donnant lieu à l'émission d'un grand volume total de données sous forme de paquets et « communication courte » une communication donnant lieu à l'émission d'un faible volume total de données sous forme de paquets.

Ce troisième type de solutions permet de choisir automatiquement les communications à favoriser. Toutefois le mécanisme de priorité mis en oeuvre interrompt l'écoulement de certaines communications au bénéfice d'autres communications. Les communications longues, notamment les communications qui durent longtemps, peuvent être bloquées par l'accumulation de communications courtes, notamment des communications durant peu de temps.

En outre, lorsque une telle solution est mise en oeuvre en différents endroits d'un réseau, par exemple sur des plusieurs équipements se trouvant le long du chemin suivi par une communication, il est possible que des ressources du réseau ne soient pas utilisées efficacement et que des phénomènes d'encombrement apparaissent là où, par exemple, une solution du deuxième type n'en produirait pas. Par ailleurs, dans le cas d'une communication de type TCP, le protocole TCP peut interpréter un encombrement dans le transfert de paquets qui se prolonge comme une interruption, et dans ce cas un mécanisme d'autoajustement réduit fortement et automatiquement le débit de la communication, qui n'est ensuite ré-augmenté que de manière très progressive, conduisant à une baisse importante de la fluidité de traitement au niveau de l'utilisateur à l'origine et/ou destinataire de la communication.

Le document US 2006/0206579 A1 divulgue une interface réseau pour transmettre des paquets de données via des files d'attente sélectionnées en fonction d'un paramètre d'espacement inter-paquets associé au destinataire du paquet.

Le document US 2003/0214952 A1 divulgue un dispositif pour transmettre des paquets de données via des files d'attente sélectionnées en fonction d'un service selon lequel doit être transmis le paquet.

Il est donc besoin d'une solution visant à attribuer des ressources à des paquets ne présentant pas les inconvénients des solutions de l'art antérieur ou au moins visant à les diminuer.

Suivant un premier aspect, l'invention propose un procédé de transfert de paquets de données à une ressource partagée dans un réseau de télécommunications, le procédé comprenant les étapes suivantes :
- prévoir N files d'attentes de traitement associées chacune à une durée déterminée, où N>1;
- pour au moins un paquet à transférer, affecter ledit paquet à une des files d'attente de traitement;
- ajouter ledit paquet dans la file d'attente à laquelle il a été affecté ;
- sélectionner une file d'attente de traitement parmi les N files d'attente, de telle sorte que chaque file d'attente non vide soit sélectionnée au moins une fois au cours d'une période de temps de durée correspondant à la durée associée à la file d'attente considérée;
- extraire au moins un paquet de la file d'attente de traitement sélectionnée ; et
- transférer le paquet extrait à la ressource partagée en priorité par rapport aux paquets des autres files d'attente.

Un procédé selon l'invention permet de réduire nettement les problèmes d'encombrement au niveau de la ressource partagée. Il n'impose pas la définition de priorités par un utilisateur, ni de connaître les applications ayant donné lieu à l'émission des paquets sur le réseau.

Un procédé selon l'invention n'interrompt pas l'écoulement des paquets de certaines communications au profit d'autres communications, mais au contraire garantit que les paquets de l'ensemble des communications continuent à être transférés à la ressource.

On considère généralement qu'un faible pourcentage des communications sont longues et représentent une grande part des paquets transmis sur un réseau. Un procédé selon l'invention permet que les autres communications dites courtes ne soient pas interrompues par la surcharge des ressources occasionnée par le traitement des paquets correspondant à ce faible pourcentage de communications longues. L'écoulement continu des paquets de l'ensemble des communications, courtes ou longues, est garanti.

Dans un mode de réalisation, l'étape d'affectation d'un paquet reçu à une des files d'attente comprend les étapes suivantes :
- identifier un flux de communication auquel appartient ledit paquet,
- actualiser une valeur représentative du volume de données reçu pour le flux de communication identifié;
- déterminer la file d'attente d'affectation du paquet reçu en fonction du résultat d'au moins une comparaison entre ladite valeur actualisée et un seuil déterminé.

Un tel procédé permet de ne pas encombrer la ressource par l'écoulement de paquets correspondant à des communications génératrices de gros volumes de données au détriment de communications génératrices de faibles volumes de données. L'écoulement des paquets issus de ces dernières communications n'est pas bloqué, mais est garanti par la mise en oeuvre de cette disposition. On ne laisse pas les communications à gros volume de données monopoliser la ressource et empêcher le transfert à la ressource des paquets d'autres communications.

Le volume de données pour une communication est par exemple mesuré par le nombre des paquets reçus relatifs à une même communication ou encore par la somme de la taille des paquets successivement reçus.

Dans un mode de réalisation, un procédé selon l'invention comprend une étape de test pour déterminer, en fonction d'informations contenues dans un paquet, si ce paquet vérifie au moins une condition prédéterminée, la file d'attente d'affectation du paquet considéré étant fonction du résultat de l'étape de test.

Dans un mode de réalisation, pour un paquet reçu, on décide de ne pas ajouter ledit paquet reçu dans une des N files d'attente, si ce paquet vérifie au moins une condition prédéterminée.

Dans un mode de réalisation, lorsqu'on reçoit un paquet, on vérifie préalablement si au moins une condition parmi les conditions suivantes est remplie :
o le paquet est émis conformément à un protocole déterminé ;
o le paquet a été émis par une application déterminée mise en oeuvre dans un terminal source ou est destiné à une application déterminée mise en oeuvre dans un terminal destinataire ;
o le paquet appartient à un flux de communication dont le débit est inférieur à un seuil déterminé ;
o le paquet appartient à un flux de communication pour lequel un nombre total de paquets présents dans lesdites files d'attente, est inférieur à un seuil prédéfini.

Une telle disposition permet de détecter les paquets de communications de types particuliers, qui requièrent, par exemple, que les paquets soient écoulés très rapidement, ou encore les communications qui ont un petit débit et qui donc ne surchargent pas la ressource.

Dans un mode de réalisation, l'affectation d'un paquet reçu à une file d'attente de traitement est réalisée en fonction du résultat de la vérification. En particulier, un paquet ayant été détecté comme ne contribuant pas à la surcharge de la ressource, sera ajouté dans une file d'attente ne recevant pas des paquets identifiés comme surchargeant la ressource.

Dans un mode de réalisation, pour un paquet détecté vérifiant au moins une des conditions indiquées ci-dessus, on décide de ne pas ajouter le paquet reçu dans une des N files d'attente. Là encore, cela permet à des paquets détectés comme ne surchargeant pas la ressource ou ayant besoin d'un traitement particulièrement rapide, de ne pas être traités comme des paquets surchargeant la ressource.

Suivant un second aspect, l'invention propose un dispositif de transfert de paquets de données à une ressource partagée dans un réseau de télécommunications, ledit dispositif comprenant :
- des moyens d'affectation pour, affecter un paquet à transférer à une file d'attente parmi N files d'attentes de traitement associées chacune à une durée déterminée, où N>1 ;
- des moyens pour ajouter ledit paquet reçu dans la file d'attente à laquelle il a été affecté par les moyens d'affectation ;
- des moyens de sélection pour sélectionner une file d'attente de traitement parmi les N files d'attente de telle sorte que chaque file d'attente non vide soit sélectionnée au moins une fois au cours d'une période de temps de durée correspondant à la durée associée à la file d'attente considérée;
- des moyens pour extraire au moins un paquet de la file d'attente sélectionnée ;
- des moyens pour transférer un paquet extrait à la ressource partagée en priorité par rapport aux paquets des autres files d'attente.

Selon une implémentation préférée, les différentes étapes du procédé selon l'invention sont mises en oeuvre par un logiciel, comprenant des instructions logicielles destinées à être exécutées par un processeur de données du dispositif selon l'invention et conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

L'invention vise aussi un support d'informations lisible par un ordinateur ou processeur de données et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

D'autres caractéristiques et avantages de l'invention apparaîtront encore à la lecture de la description qui va suivre. Celle-ci est purement illustrative et doit être lue en regard des dessins annexés sur lesquels :
- la figure 1 représente un système mettant en oeuvre l'invention dans un mode de réalisation ;
- la figure 2 représente un module de transfert de paquets à une ressource partagée, au sein du système de la figure 1 ;
- la figure 3 est un organigramme représentant des étapes d'un procédé de transfert de paquets dans un mode de réalisation de l'invention.

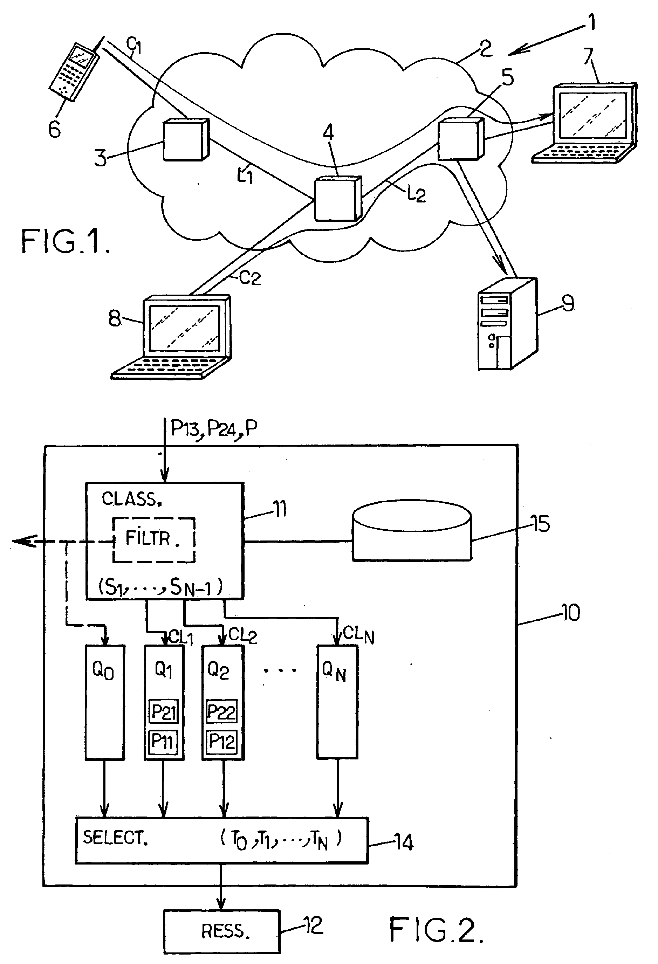

Sur la figure 1 est représenté un système 1 dans un mode de réalisation de l'invention. Le système 1 comporte un réseau de télécommunications 2 de type Internet par exemple.

Le réseau 2 comporte une pluralité d'équipements destinés à traiter des paquets. Parmi ces équipements figurent par exemple des équipements de type routeurs, commutateurs, multiplexeurs d'accès de ligne d'abonné numérique (DSLAM).

Le réseau 2 comporte en outre une pluralité de liaisons de communication, par exemple de type câble, fibre optique, radio etc, destinées à transporter des paquets.

Parmi ces pluralités d'équipements et de liaisons, sont représenté sur la figure 1 trois équipements 3, 4, 5 qui sont par exemple des routeurs et les liaisons de communication L1 et L2 reliant entre eux ces équipements 3, 4, 5.

Ces équipements et liaisons sont destinés à permettre la mise en oeuvre de télécommunications entre entités distantes, parmi lesquelles par exemple une communication C1 entre un PDA 6 et un ordinateur personnel 7 et une communication C2 entre un ordinateur personnel 8 et un serveur Web 9.

Une application exécutée dans un terminal à l'origine d'une communication (par exemple respectivement le PDA 6 et l'ordinateur 8) donne lieu à l'émission d'un flux de paquets à destination d'un terminal destinataire de la communication (par exemple respectivement l'ordinateur 7 et le serveur Web 9). Ces paquets suivent un trajet déterminé entre les terminaux sources et destinataires et doivent être traités dans le réseau 2 par un certain nombre de ressources. Ces ressources sont partagées entre des paquets mettant en oeuvre des communications différentes.

On entend par ressource partagée tout dispositif de traitement au sein du réseau recevant, en vue de leur traitement, de multiples paquets issus de plusieurs communications. Ainsi parmi les ressources partagée figurent les équipements 3, 4, 5 et les liaisons L1 et L2.

L'invention propose un procédé pouvant être mis en oeuvre pour réguler le transfert de paquets vers une ou plusieurs ressource(s) partagée(s), en vue de limiter les phénomènes d'encombrements au niveau de la ressource partagée. Le procédé est donc destiné à être mis en oeuvre en amont de la ressource. Cependant il est également possible de mettre en oeuvre le procédé en aval de la ressource. En effet, l'effet d'une régulation en aval d'une ressource se répercute en amont de cette ressource du fait que l'équipement destinataire des paquets, non seulement reçoit ces paquets avec un débit modifié du fait de cette régulation, mais y répond également avec un débit modifié correspondant.

Dans le mode de réalisation particulier considéré ici, il va être décrit, en référence à la figure 2, un module 10 de transfert de paquets disposé au sein de l'équipement 4 en vue de réguler le transfert des paquets transmis par l'équipement 4 à la ressource constituée par la liaison L2.

Un module similaire est dans un mode de réalisation inséré en outre dans l'équipement 3 pour réguler le transfert des paquets transmis par l'équipement 3 à la ressource constituée par la liaison L1, et/ou disposé en amont de l'équipement 4 pour réguler le transfert des paquets transmis à la ressource constituée par l'équipement 4 etc.

Dans un premier mode de réalisation, le module 10 de transfert de paquets comprend un bloc 11 de classement de paquets, N files d'attentes Q₁ à Q_{N}, un bloc 14 de sélection de paquets et une mémoire 15.

Dans un mode de réalisation, les files d'attente Q₁ à Q_{N} sont des mémoires de type FIFO. Chaque file d'attente est destinée à contenir des paquets d'une classe respective associée. Ainsi la file d'attente Qᵢ, avec i=1 à N, est destinée à contenir les paquets de la classe CLᵢ.

La mémoire 15 comprend une pluralité de compteurs. Ces compteurs sont conçus pour mémoriser un volume total de données déjà reçus pour un flux de communication donné, en association avec un identifiant de ce flux de communication. La mise à jour de la valeur du compteur est soit effectuée à chaque paquet reçu, soit suivant une procédure d'échantillonnage permettant une mise à jour moins fréquente du compteur. Dans le deuxième cas, si aucun paquet d'un flux de communication n'a été échantillonné, la valeur de compteur de ce flux ne sera pas mémorisée.

Le module 10 de transfert de paquets est adapté pour recevoir des paquets correspondant à des communications diverses (parmi lesquelles figurent par exemple ici la communication C1 depuis le PDA 6 vers l'ordinateur personnel 7 et la communication C2 entre l'ordinateur personnel 8 et le serveur Web 9). Il est adapté en outre pour réguler le transfert des paquets reçus à la ressource 12 en aval du module 10 (dans le cas particulier considéré, la ressource 12 est la liaison de communication L2).

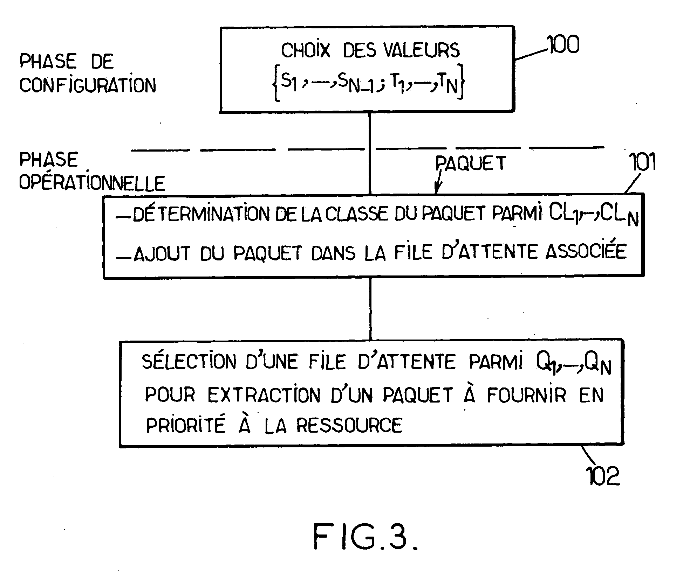

Les étapes mises en oeuvre par le module 10 de transfert sont décrites ci-dessous en référence à la figure 3.

Dans une étape 100 de configuration du module 10 de transfert de paquets, préalablement à la phase opérationnelle, des valeurs respectives sont attribuées à chacun de N-1 seuils S₁ à S_{N-1}, avec S₁ < S₂<S₃< ...<S_{N-1}. Différents jeux de valeurs sont utilisables. Le jeu de valeurs donnant les meilleurs résultats en termes de réduction de phénomènes d'encombrement lors de périodes de tests pourra être finalement retenu pour la phase opérationnelle.

Dans un mode de réalisation, ces valeurs S₁ à S_{N-1} sont représentatives de volumes de données.

Dans l'étape 100 de configuration préalable, une valeur indiquant une durée est définie respectivement pour chaque file d'attente. Ainsi la valeur de durée Tᵢ est affectée à la file d'attente Qᵢ, i= 1 à N. Le jeu de valeurs de durée {Ti} _{i=1 à N} finalement retenu peut être défini à l'issue d'une période d'expérimentation testant plusieurs jeux de valeurs {Ti} _{i=1 à N}.

Dans le premier mode de réalisation considéré, lorsque le module 10 de transfert de paquets reçoit un nouveau paquet, par exemple un paquet P13, ce dernier est fourni en entrée du bloc 11 de classement.

Dans une étape 101 de classement, le bloc 11 de classement détermine la classe à laquelle appartient le paquet P13 reçu, en fonction d'informations indiquées dans le paquet P13. Dans le cas présent, le bloc 11 de classement identifie la communication à laquelle appartient le paquet reçu P13, en fonction des éléments suivants :
- les adresses IP sources et destination,
- les ports source et destination (qui identifient respectivement l'application, sur le terminal à l'origine de la communication, qui a donné lieu à la communication et l'application, sur le terminal destinataire de la communication, à laquelle est destinée la communication),
- et le numéro du protocole utilisé au sein du protocole IP.

Si la communication ainsi identifiée n'a pas de valeur de compteur mémorisée dans la mémoire 15 en association avec un identifiant de la communication, la valeur d'un compteur est alors initialisée à une valeur nulle, puis mémorisée en association dans la mémoire 15 avec un identifiant de la communication.

Puis le bloc 11 de classement met à jour la valeur du compteur associé à la communication à laquelle appartient le paquet P13 reçu, en ajoutant à la valeur mémorisée dans le compteur le volume de données correspondant à ce nouveau paquet reçu P13. Dans le mode de réalisation considéré, le volume de données correspondant à un paquet est égal à 1 (l'unité est le paquet ; le compteur comptabilise ainsi le nombre de paquets déjà reçus pour une même communication). Dans un autre mode de réalisation possible, le volume de données d'un paquet est égal à la taille du paquet.

Suivant un mode de réalisation l'initialisation du compteur et la mise à jour du compteur ne sont effectuées que si le paquet à classer est retenu par une procédure d'échantillonnage.

Par exemple, la communication identifiée est la communication C1 pour le paquet P13 reçu. Dans le cas présent, il s'avère que la communication C1 a déjà un paquet P11 en file d'attente Q1 et un paquet P12 dans la file d'attente Q₂.

Puis, le bloc de classement 11 compare la valeur du compteur pour la communication identifiée aux seuils S₁ à S_{N}, puis détermine la classe en fonction du résultat de ces comparaisons, de la manière suivante.

Si la valeur actualisée du compteur est inférieure au seuil S₁, la classe CL₁ est attribuée au paquet reçu et le paquet est ajouté dans la file d'attente Q₁ associée aux paquets de classe CL₁.

Si, avec i entier e [1, N-2], la valeur actualisée du compteur est supérieure ou égale au seuil Si et inférieure au seuil Sᵢ₊₁, la classe CLᵢ₊₁ est attribuée au paquet reçu et le paquet est ajouté dans la file d'attente Qᵢ₊₁ associée aux paquets de classe CLᵢ₊₁.

Si la valeur actualisée du compteur est supérieur au seuil S_{N-1}, la classe CL_{N} est attribuée au paquet reçu et ce paquet est ajouté dans la file d'attente Q_{N} associée aux paquets de classe CL_{N}.

Si aucun compteur n'a été initialisé pour la communication identifiée, on considère que ce compteur est à zéro lors de la comparaison aux seuils S₁ à S_{N-1}.

Dans le cas présent, la valeur actualisée du compteur associé à la communication C1 est supérieure ou égale au seuil S₁ et inférieure au seuil S₂. Le paquet P13 est donc ajouté à la queue de la file d'attente Q₂.

Similairement, lorsque le module 10 de transfert de paquets reçoit ensuite un nouveau paquet, par exemple un paquet P24, il identifie que le flux de communication auquel appartient le paquet reçu P24 est le flux de communication C2.

Dans le cas présent, un paquet P21 se trouve dans la file d'attente Q₁ (comme on le voit, les files d'attente peuvent contenir des paquets de communications différentes) et deux paquet P22 et P23 sont en en file d'attente Q₂.

Si le paquet P21 est retenu par une procédure d'échantillonnage alors le bloc 11 de classement met à jour le compteur associé à la communication C2 à laquelle appartient le paquet P24 reçu, en ajoutant 1 à la valeur mémorisée dans le compteur.

Puis, le bloc 11 de classement compare la valeur du compteur pour la communication C2 aux seuils S₁ à S_{N}. Si aucun compteur n'a été initialisé pour la communication C2, le bloc 11 procèdera en considérant une valeur de compteur nulle.

Dans le cas présent, la valeur actualisée du compteur associé à la communication C2 est supérieure ou égale au seuil S₂ et inférieure au seuil S₃. Le paquet P24 est donc ajouté à la queue de la file d'attente Q₃.

Ces opérations sont réitérées lors de la réception de nouveaux paquets par le module 10 de transfert.

Par ailleurs, tandis que le bloc 11 de classement répartit des paquets reçus dans les différentes files d'attente Q₁ à Q_{N}, le bloc 14 de sélection, dans une étape 102, sélectionne successivement les files d'attente pour fournir en priorité des paquets extraits de ces files sélectionnées à la ressource 12.

Lorsqu'une file d'attente est sélectionnée par le bloc 14, des paquets en sont extraits par le bloc 14, qui les fournit en priorité (par rapport aux paquets extraits d'une file d'attente sélectionnée par la suite) à la ressource partagée 12.

Lorsque les files d'attente sont de type FIFO, et qu'une file d'attente a été sélectionnée pour en extraire des paquets à fournir en priorité à la ressource partagée, les paquets extraits de cette file sont prioritairement les paquets présents dans la file d'attente depuis le plus de temps.

La file d'attente peut être sélectionnée en fonction d'une procédure itérative d'ordonnancement des N files d'attente.

La procédure d'ordonnancement peut être de différents types, selon les modes de réalisation.

Par exemple, la procédure d'ordonnancement peut être basée sur le principe de parcourir en séquence les files l'une après l'autre (principe de « round robin »).

Dans un autre mode de réalisation, la procédure d'ordonnancement peut être basée sur le principe de viser à fournir à la ressource le même débit de données provenant de chaque file (principe de « fair queueing »).

Dans un autre mode de réalisation, la procédure d'ordonnancement peut être basée sur le principe de viser à fournir à la ressource des débits pondérés de données provenant des files d'attente respectives (principe de « weighted fair queueing ») : par exemple, un débit 4.D₀ pour la file d'attente Q₁, un débit 3.D₀ pour la file Q₂ etc, où Do est une valeur de débit donnée.

Dans un autre mode de réalisation, la procédure d'ordonnancement peut être basée sur le principe de viser à fournir à la ressource des débits prédéterminés pour des groupes de files, organisés sous forme d'arborescences ou non (principes de « class based queueing », utilisé notamment dans le système d'exploitation Linux ou de « hierarchical token bucket »).

Quel que soit le principe sur lequel se base la procédure d'ordonnancement pour sélectionner successivement les files d'attentes au sein desquelles des paquets vont être fournis successivement à la ressource 12, le bloc 14 de sélection, dans la mise en oeuvre de la procédure d'ordonnancement, est contraint de sélectionner au moins un paquet dans chaque file d'attente Qᵢ non vide lors de chaque période de durée Tᵢ préalablement définie.

Ainsi, il est garanti que si la file d'attente Qᵢ est non vide, avec i = 1 N, un ou des paquets vont être extraits de la file d'attente au moins toutes les Tᵢ secondes, par exemple, si la valeur de Ti est exprimée en secondes.

Un débit minimal d'extraction de paquets est donc garanti pour chaque file d'attente.

Une portion de la bande passante de la liaison L2, qui est ici la ressource partagée à laquelle les paquets sont transférés, est ainsi dédiée à chaque file d'attente non vide ou encore à chaque classe de paquets associée à une file d'attente non vide.

Dans un mode de réalisation particulier, on choisit T₁=T₂=...=T_{N} et la portion de bande passante dédiée à chaque file est par exemple fixée égale à 1/Nième de la bande passante de la liaison L2.

Le transfert des paquets est donc régulé, en permettant de diminuer les encombrements sans interrompre de communications.

Dans un mode de réalisation, on impose que si une liste d'attente est vide, la portion du débit d'extraction de paquets qui lui est dédiée est réaffectée à l'extraction des paquets depuis d'autres files d'attente. Ainsi la capacité de la ressource est exploitée au maximum.

Dans un mode de réalisation, il est en outre défini une taille minimale K, telle que le bloc 14 de sélection, dans la mise en oeuvre de la procédure d'ordonnancement, est contraint de sélectionner un minimum de paquets de taille globale supérieure à K, dans chaque file d'attente Qᵢ non vide lors de chaque période de durée Tᵢ préalablement définie, avec i= 1 à N.

Dans un mode de réalisation, il est en outre défini, dans l'étape 100 de configuration préalable, une taille maximum pour chacune des files d'attente, en terme de nombre de paquets ou de taille de données (obtenus en multipliant le nombre des paquets par la taille des paquets).

Ainsi lorsqu'une file a atteint sa taille maximum et tant que sa taille n'a pas diminué, les nouveaux paquets reçus qui devraient être ajoutés par le bloc 11 de classement dans cette file d'attente, sont rejetés. Toutefois, toute autre méthode de remplissage des files d'attente est également utilisable, sans que cela ait un impact sur l'efficacité du procédé selon l'invention. Ainsi dans une autre méthode de remplissage, lorsqu'une file a atteint sa taille maximum et tant que sa taille n'a pas diminué, les nouveaux paquets reçus qui devraient être ajoutés par le bloc 11 de classement dans cette file d'attente, pourraient remplacer des paquets présents dans la file.

Comme on le voit dans le premier mode de réalisation décrit ci-dessus, les étapes 101 et 102 permettent de ne pas bloquer des paquets de communication à cause de l'affluence de paquets d'autres communications très consommatrices de ressource à un moment donné. Ces communications sont notamment des communications dites élastiques qui ont tendance à occuper, pendant le temps plus ou moins long que dure la communication, une part importante des ressources disponibles qu'elles traversent (par exemple le débit disponible sur une liaison de communication). De telles communications sont par exemple des transferts de fichiers ou encore des interrogations de serveurs Web.

Dans un second mode de réalisation, le module 10 de transfert de paquets comporte en outre, au sein du module 11 de classement un bloc 13 de préfiltrage et une file d'attente supplémentaire Q₀. Le fonctionnement du module 10 de transfert est alors modifié de la façon décrite ci-dessous par rapport au premier mode de réalisation décrit précédemment.

Lorsque le module 10 de transfert reçoit un paquet P devant être transféré à la ressource 12, le bloc 13 de préfiltrage détermine si le paquet reçu vérifie au moins une condition. Puis suivant le résultat de la vérification, le module 10 effectue ou non la détermination de la classe comme indiqué à l'étape 101.

Suivant les modes de réalisation, le bloc 13 de préfiltrage détermine si l'une ou plusieurs des conditions suivantes (combinées par exemple sous forme de fonctions ET, OU logiques) est vérifiée:
a/ « le paquet est transmis conformément à un protocole déterminé » ;
b/ « le paquet a été émis par une application déterminée mise en oeuvre dans le terminal source ou est destinée à une application déterminée mise en oeuvre dans le terminal destinataire » ;
c/ « le paquet appartient à un flux de communication dont le débit est inférieur à un seuil déterminé » ;
d/ « le paquet appartient à un flux de communication pour lequel un nombre total de paquets présents dans lesdites files d'attente, est inférieur à un seuil prédéfini ».

Si le paquet reçu P vérifie la ou les conditions retenues, le paquet P ne subit pas l'étape de détermination de classe telle que décrite ci-dessus à l'étape 101. Dans un mode de réalisation, le bloc 13 de préfiltrage envoie alors le paquet vers un bloc de traitement autre. Dans un autre mode de réalisation, le bloc 13 de préfiltrage envoie le paquet vers une file d'attente additionnelle Q₀.

Dans un cas où une file d'attente additionnelle est créée, une durée minimale T₀ est affecté à la file d'attente Q₀. Le déroulement de la sélection décrit ci-dessus à l'étape 102 en référence aux files d'attente Q₁ à Q_{N} est dans un tel cas modifié en considérant N+1 files d'attentes Q₀ à Q_{N} à la place des N files d'attentes considérées précédemment. Une portion du débit de traitement de la ressource 12 est ainsi dédiée aux paquets de chaque file d'attente Q₀ à Q_{N}.

Par exemple, dans un mode de réalisation, on fixe T₀=T₁=T₂=...=T_{N}. Le débit de transfert à la ressource partagée est ainsi divisé en N+1 portions, chacune de ces portions étant dédiée à une classe respective de paquets et est utilisée pour transférer des paquets de la file d'attente associée à cette classe. La taille de ces portions est différente de 0, sauf si une file d'attente est vide. Dans ce cas, la taille de la portion dédiée à cette file d'attente est nulle.

Si le paquet P reçu ne vérifie pas la ou les conditions, le paquet subit alors l'étape de détermination de classe telle que décrite ci-dessus à l'étape 101.

La vérification des conditions a/ à c/ permet de détecter des paquets nécessitant un traitement particulier et ne nécessitant pas d'être régulés de la même manière que des paquets des communications qui tendent à occuper un maximum de débit (par exemple ceux des communications élastiques).

La vérification de la condition a/, « un protocole associé au paquet est un protocole de type déterminé », permet de détecter des paquets par exemple de type UDP, qui ont besoin d'être transférés selon un débit minimum fixé, et ce indépendamment du volume de la communication à laquelle appartient le paquet.

La vérification de la condition b/, « le paquet a été émis par une application déterminée dans le terminal source ou est destinée à une application déterminée dans le terminal destinataire » permet de détecter des paquets qui ont besoin d'être transférés rapidement, car ils appartiennent à des communications générées ou destinées à des applications requérant un transfert rapide. Parmi ces applications figure par exemple Telnet (permettant de prendre la main sur un écran d'ordinateur distant), qui donne lieu à l'émission de nombreux paquets.

La vérification de la condition c/, « le paquet met en oeuvre une communication associée à un débit inférieur à un seuil déterminé » permet de ne pas pénaliser une communication ayant une durée temporelle longue et donc générant au total beaucoup de paquets, tout en ayant un faible nombre de paquets générés par unité de temps : par exemple les communications de jeux en réseau entre un joueur et un serveur d'applications de jeu. Là encore, il est important que les paquets soient traités rapidement. En outre, de tels paquets ne contribuent pas de manière notable à la surcharge d'une ressource. Il n'est donc pas nécessaire de les réguler de la même manière que les communications prenant une part importante à la surcharge d'une ressource. La vérification de cette condition nécessite, au niveau du bloc de filtrage, de déterminer le débit des communications.

La vérification de la condition d/, « le paquet met en oeuvre une télécommunication correspondant à un nombre de paquets dans au moins une file d'attente, inférieur à un seuil prédéfini » permet de ne pas pénaliser des communications du type de celles visées par la vérification de la condition c/, sans avoir néanmoins à déterminer le débit d'une communication au niveau du bloc de filtrage.

Ainsi le deuxième mode de réalisation permet de ne pas faire subir à des paquets particuliers les temporisations engendrées avant transfert à la ressource telles qu'engendrées par l'application d'un procédé suivant le premier mode de réalisation.

Dans un mode de réalisation, le préfiltrage peut avoir lieu dans un module distinct, et disposé en amont, du module 10 de transfert, à la place du bloc 13. Néanmoins, répertorier les communications, comme le nécessitent les étapes réalisées dans le préfiltrage, est coûteux en termes de capacités de traitement. Il est donc avantageux de ne pas avoir à réaliser cette opération en deux endroits distincts, et donc de réaliser ce préfiltrage au sein du module 10 de transfert, qui doit aussi répertorier les communications pour l'étape 101 de classement.

Dans un mode de réalisation, le réseau 2 est un réseau dans une majorité des paquets circulant sont conformes au protocole TCP. Il est prévu dans le protocole TCP un mécanisme qui gère l'écoulement des paquets. En effet, lorsque au niveau du terminal à l'origine des paquets, il est détecté un fort ralentissement de la transmission vers le terminal destinataire des paquets (en fonction par exemple du rythme de réception de messages d'acquittement de réception de paquets), le débit d'émission des paquets par le terminal à l'origine des paquets est alors fortement diminué. Dans un tel cas, les périodes de durée T₁ à T_{N} sont définis de manière à garantir la plupart du temps un transfert des paquets à la ressource avant que de telles opérations d'autoajustement ne soient déclenchées.

L'invention vise ainsi à proposer une solution de régulation du transfert de paquets à destination d'une ressource partagée, qui permette de limiter les phénomènes d'encombrement au niveau de la ressource, en garantissant un écoulement continu des paquets de toutes les types de communications, sans interrompre totalement l'écoulement de certaines communications.

Elle permet de bénéficier des avantages des solutions du troisième type sans en avoir les inconvénients. Notamment, la mise en oeuvre d'un procédé selon l'invention en plusieurs points d'un réseau ne conduit pas à une utilisation inefficace des ressources. Elle permet en outre d'éviter les phénomènes d'autoajustement, et ses conséquences, en cas de communications TCP.

Un procédé suivant l'invention peut être mis en oeuvre en vue de transférer des données à tout type de ressources partagées. Ces ressources partagées peuvent être des liaisons de transmission, des équipements quelconques devant traiter des paquets (routeurs, DSLAM ....) et pouvant donc donner lieu à des phénomènes d'encombrement en cas d'un grand nombre de paquets incidents. Le procédé peut alors être mis en oeuvre dans un module de transfert en amont de la ressource, particulièrement si la ressource est de type liaison, ou encore dans un premier étage de traitement de la ressource, notamment si la ressource est de type équipements.

Dans un mode de réalisation, au moins certaines des étapes décrites ci-dessus, notamment celles réalisées par le bloc 11 de classement et/ou le bloc 14 de sélection, sont mises en oeuvre suite à l'exécution, sur des moyens de traitement du module 10 de transfert, d'instructions de programmes d'ordinateur.

Le procédé ci-dessus a été décrit dans un réseau de type Internet. Il peut bien sûr être mis en oeuvre dans tout type de réseau adapté pour transmettre des paquets de données.

Un procédé selon l'invention peut être mis en oeuvre dans toute entité destinée à transférer à une ressource des paquets de données en vue de leur traitement par la ressource. Une telle entité est par exemple un équipement du coeur de réseau tel qu'un routeur ou encore un équipement d'un réseau d'accès. Une telle entité peut également être des terminaux, tels que des téléphones mobiles, dans le cadre d'applications de type « data », ou des Assistants Numériques Personnels (en anglais « Personal digital Assistant » ou PDA). Le procédé peut également être mis en oeuvre par des modems ADSL ou boîtiers d'accès multimédia (classiquement donnant accès à Ethernet, TV et téléphonie) etc.

## Revendications

1. Procédé de transfert de paquets de données à une ressource partagée (12) dans un réseau (2) de télécommunications, ledit procédé comprenant les étapes suivantes :
- pour au moins un paquet à transférer à une file d'attente parmi N files d'attentes de traitement (Qᵢ, _{li=1 à N}) associées chacune à une durée déterminée, où N>1, affecter ledit paquet à une des files d'attente de traitement;
- ajouter ledit paquet (P13) dans la file d'attente (Q₁) à laquelle il a été affecté ;
- sélectionner une file d'attente de traitement parmi les N files d'attente, de telle sorte que chaque file d'attente non vide soit sélectionnée au moins une fois au cours d'une période de temps de durée correspondant à la durée associée à la file d'attente considérée;
- extraire au moins un paquet de la file d'attente de traitement sélectionnée ;
- transférer le paquet extrait à la ressource partagée (12) en priorité par rapport aux paquets des autres files d'attente ;
le procédé étant **caractérisé en ce que** l'étape d'affectation d'un paquet reçu à une des files d'attente comprend les étapes suivantes :
- identifier un flux de communication auquel appartient ledit paquet (P13),
- actualiser une valeur représentative du volume de données reçu pour le flux de communication identifié;
- déterminer la file d'attente (Q₁) d'affectation du paquet reçu en fonction du résultat d'au moins une comparaison entre ladite valeur actualisée et un seuil déterminé.

2. Procédé selon la revendication 1, comprenant une étape de test pour déterminer, en fonction d'informations contenues dans un paquet, si ce paquet vérifie au moins une condition prédéterminée, la file d'attente (Q₁) d'affectation du paquet considéré étant fonction du résultat de l'étape de test.

3. Procédé selon la revendication 1, selon lequel pour un paquet reçu, on décide de ne pas ajouter ledit paquet reçu dans une des N files d'attente, si ce paquet vérifie au moins une condition prédéterminée.

4. Procédé selon la revendication 2 ou 3, comprenant, à réception d'un paquet (P), ladite au moins une condition est choisie parmi les conditions suivantes :
o le paquet est émis conformément à un protocole déterminé ;
o le paquet a été émis par une application déterminée mise en oeuvre dans un terminal source ou est destiné à une application déterminée mise en oeuvre dans un terminal destinataire ;
o le paquet appartient à un flux de communication dont le débit est inférieur à un seuil déterminé ;
o le paquet appartient à un flux de communication pour lequel un nombre total de paquets présents dans lesdites files d'attente, est inférieur à un seuil prédéfini.

5. Dispositif (10) de transfert de paquets de données à une ressource partagée (12) dans un réseau (2) de télécommunications, ledit dispositif comprenant :
- des moyens (11) d'affectation pour, affecter un paquet à transférer à une file d'attente parmi N files d'attentes de traitement (Qᵢ, _{li=1 à N}) associées chacune à une durée déterminée, où N>1 ;
- des moyens (11) pour ajouter ledit paquet reçu dans la file d'attente à laquelle il a été affecté par les moyens d'affectation ;
- des moyens (14) de sélection pour sélectionner une file d'attente de traitement parmi les N files d'attente de telle sorte que chaque file d'attente non vide soit sélectionnée au moins une fois au cours d'une période de temps de durée correspondant à la durée associée à la file d'attente considérée;
- des moyens (14) pour extraire au moins un paquet de la file d'attente sélectionnée ;
- des moyens (14) pour transférer un paquet extrait à la ressource partagée en priorité par rapport aux paquets des autres files d'attente ;
le dispositif étant **caractérisé en ce que** les moyens (11) d'affectation, pour au moins certains des paquets reçus, sont adaptés pour :
- identifier un flux de communication auquel appartient ledit paquet (P13),
- actualiser une valeur représentative du volume de données reçu pour le flux de communication identifié;
- déterminer la file d'attente (Q₁) d'affectation du paquet reçu en fonction du résultat d'au moins une comparaison entre ladite valeur actualisée et un seuil déterminé.

6. Programme d'ordinateur comprenant des instructions logicielles destinées à commander l'exécution des étapes d'un procédé selon l'une quelconque des revendications 1 à 4.

7. Support de données comprenant un programme d'ordinateur selon la revendication 6.

## Claims

1. Method of transferring data packets to a shared resource (12) in a telecommunications network (2), said method comprising the following steps:
- for at least one packet to be transferred to a queue from among N processing queues (Qᵢ, _{li=1 to N}) each associated with a determined duration, where N>1, assigning said packet to one of the processing queues;
- adding said packet (P13) to the queue (Q₁) to which it has been assigned;
- selecting a processing queue from among the N queues, in such a way that each non-empty queue is selected at least once in the course of a time period of duration corresponding to the duration associated with the queue considered;
- extracting at least one packet from the processing queue selected; and
- transferring the extracted packet to the shared resource (12) by priority with respect to the packets of the other queues;
the method being **characterized in that** the step of assigning a packet received to one of the queues comprises the following steps:
- identifying a communication stream to which said packet (P13) belongs,
- updating a value representative of the data volume received for the communication stream identified;
- determining the assignment queue (Q₁) for the packet received as a function of the result of at least one comparison between said updated value and a determined threshold.

2. Method according to Claim 1, comprising a test step of determining, as a function of information contained in a packet, whether this packet satisfies at least one predetermined condition, the assignment queue (Q₁) for the packet considered being dependent on the result of the test step.

3. Method according to Claim 1, according to which, for a packet received, it is decided not to add said packet received to one of the N queues, if this packet satisfies at least one predetermined condition.

4. Method according to Claim 2 or 3, comprising, on receipt of a packet (P), said at least one condition is chosen from among the following conditions:
o the packet is sent in accordance with a determined protocol;
o the packet has been sent by a determined application implemented in a source terminal or is intended for a determined application implemented in a recipient terminal;
o the packet belongs to a communication stream whose throughput is less than a determined threshold;
o the packet belongs to a communication stream for which a total number of packets present in said queues is less than a predefined threshold.

5. Device (10) for transferring data packets to a shared resource (12) in a telecommunications network (2), said device comprising:
- assignment means (11) for assigning a packet to be transferred to a queue from among N processing queues (Qᵢ, _{li=1 to N}) each associated with a determined duration, where N>1;
- means (11) for adding said packet received to the queue to which it has been assigned by the assignment means;
- selection means (14) for selecting a processing queue from among the N queues in such a way that each non-empty queue is selected at least once in the course of a time period of duration corresponding to the duration associated with the queue considered;
- means (14) for extracting at least one packet from the queue selected;
- means (14) for transferring an extracted packet to the shared resource by priority with respect to the packets of the other queues;
the device being **characterized in that** the assignment means (11), for at least some of the packets received, are adapted for:
- identifying a communication stream to which said packet (P13) belongs,
- updating a value representative of the data volume received for the communication stream identified;
- determining the assignment queue (Q₁) for the packet received as a function of the result of at least one comparison between said updated value and a determined threshold.

6. Computer program comprising software instructions intended to control the execution of the steps of a method according to any one of Claims 1 to 4.

7. Data medium comprising a computer program according to Claim 6.

## Patentansprüche

1. Verfahren zur Übertragung von Datenpaketen an eine gemeinsam genutzte Ressource (12) in einem Telekommunikationsnetzwerk (2), wobei das Verfahren die folgenden Schritte enthält:
- für mindestens ein an eine Warteschlange von N Verarbeitungswarteschlangen (Qᵢ, _{i=1 bis N}) , die je einer bestimmten Dauer zugeordnet sind, wobei gilt N>1, zu übertragendes Paket, Zuweisung des Pakets zu einer der Verarbeitungswarteschlangen;
- Hinzufügung des Pakets (P13) zu der Warteschlange (Q₁), der es zugewiesen wurde;
- Auswahl einer Verarbeitungswarteschlange unter den N Warteschlangen derart, dass jede nicht leere Warteschlange mindestens einmal während eines Zeitraums einer Dauer ausgewählt wird, die der Dauer entspricht, die der betreffenden Warteschlange zugeordnet ist;
- Entnahme mindestens eines Pakets aus der ausgewählten Verarbeitungswarteschlange;
- Übertragung des entnommenen Pakets an die gemeinsam genutzte Ressource (12) prioritär bezüglich der Pakete der anderen Warteschlangen;
wobei das Verfahren **dadurch gekennzeichnet ist, dass** der Schritt der Zuweisung eines empfangenen Pakets an eine der Warteschlangen die folgenden Schritte enthält:
- Erkennung des Kommunikationsflusses, zu dem das Paket (P13) gehört,
- Aktualisierung eines Werts, der für das für den erkannten Kommunikationsfluss empfangene Datenvolumen repräsentativ ist;
- Bestimmung der Zuweisungswarteschlange (Q₁) des empfangenen Pakets abhängig vom Ergebnis mindestens eines Vergleichs zwischen dem aktualisierten Wert und einer bestimmten Schwelle.

2. Verfahren nach Anspruch 1, das einen Testschritt enthält, um abhängig von in einem Paket enthaltenen Informationen zu bestimmen, ob dieses Paket mindestens eine vorbestimmte Bedingung erfüllt, wobei die Zuweisungswarteschlange (Q₁) des betreffenden Pakets vom Ergebnis des Testschritts abhängt.

3. Verfahren nach Anspruch 1, gemäß dem für ein empfangenes Paket entschieden wird, das empfangene Paket nicht zu einer der N Warteschlangen hinzuzufügen, wenn dieses Paket mindestens eine vorbestimmte Bedingung erfüllt.

4. Verfahren nach Anspruch 2 oder 3, das bei Empfang eines Pakets (P) die mindestens eine Bedingung enthält, die aus den folgenden Bedingungen ausgewählt wird:
O das Paket wird gemäß einem bestimmten Protokoll gesendet;
O das Paket wurde von einer bestimmten Anwendung gesendet, die in einem Ausgangsendgerät durchgeführt wird, oder ist für eine bestimmte Anwendung bestimmt, die in einem Zielendgerät durchgeführt wird;
O das Paket gehört zu einem Kommunikationsfluss, dessen Datenübertragungsrate niedriger als eine bestimmte Schwelle ist;
O das Paket gehört zu einem Kommunikationsfluss, für den eine Gesamtzahl von in den Warteschlangen vorhandenen Paketen geringer als eine vordefinierte Schwelle ist.

5. Vorrichtung (10) zur Übertragung von Datenpaketen an eine gemeinsam genutzte Ressource (12) in einem Telekommunikationsnetzwerk (2), wobei die Vorrichtung enthält:
- Zuweisungseinrichtungen (11), um ein zu übertragendes Paket einer Warteschlange unter N Verarbeitungswarteschlangen (Qᵢ, _{i = 1 bis N}) zuzuweisen, die je einer bestimmten Dauer zugeordnet sind, wobei gilt N>1;
- Einrichtungen (11), um das empfangene Paket zu der Warteschlange hinzuzufügen, der es von dem Zuweisungseinrichtungen zugewiesen wurde;
- Auswahleinrichtungen (14), um eine Verarbeitungswarteschlange unter den N Warteschlangen so auszuwählen, dass jede nicht leere Warteschlange mindestens einmal während eines Zeitraums einer Dauer ausgewählt wird, die der Dauer entspricht, die der betreffenden Warteschlange zugeordnet ist;
- Einrichtungen (14), um mindestens ein Paket aus der ausgewählten Warteschlange zu entnehmen;
- Einrichtungen (14), um ein entnommenes Paket an die gemeinsam genutzte Ressource prioritär bezüglich der Pakete der anderen Warteschlangen zu übertragen;
wobei die Vorrichtung **dadurch gekennzeichnet ist, dass** die Zuweisungseinrichtungen (11) für mindestens bestimmte der empfangenen Pakete geeignet sind, um:
- einen Kommunikationsfluss zu erkennen, zu dem das Paket (P13) gehört,
- einen Wert zu aktualisieren, der für das empfangene Datenvolumen für den erkannten Kommunikationsfluss repräsentativ ist;
- die Zuweisungswarteschlange (Q₁) des empfangenen Pakets abhängig von Ergebnis mindestens eines Vergleichs zwischen dem aktualisierten Wert und einer bestimmten Schwelle zu bestimmen.

6. Computerprogramm, das Software-Anweisungen enthält, die dazu bestimmt sind, die Ausführung der Schritte eines Verfahrens nach einem der Ansprüche 1 bis 4 zu steuern.

7. Datenträger, der ein Computerprogramm nach Anspruch 6 enthält.
